(19) Europäisches Patentamt
European Patent Office
Office européen des brevets

(11) **EP 4 162 235 B1**

(12) **FASCICULE DE BREVET EUROPEEN**

(45) Date de publication et mention de la délivrance du brevet:
**26.03.2025 Bulletin 2025/13**

(21) Numéro de dépôt: **21734428.2**

(22) Date de dépôt: **01.06.2021**

(51) Classification Internationale des Brevets (IPC):
**G01D 5/353** (2006.01)

(52) Classification Coopérative des Brevets (CPC):
**G01D 5/35316**

(86) Numéro de dépôt international:
**PCT/FR2021/050991**

(87) Numéro de publication internationale:
**WO 2021/245349 (09.12.2021 Gazette 2021/49)**

(54) **CAPTEUR D'ÉROSION À RÉSEAU DE BRAGG POUR ENVIRONNEMENT DIFFICILE**

ABRASIONSSENSOR MIT BRAGG-GITTER FÜR RAUE UMGEBUNG

EROSION SENSOR BASED ON A BRAGG GRATING FOR HARSH ENVIRONMENT

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **05.06.2020 FR 2005913**

(43) Date de publication de la demande:
**12.04.2023 Bulletin 2023/15**

(73) Titulaire: **Commissariat à l'Energie Atomique et aux Energies Alternatives**
**75015 Paris (FR)**

(72) Inventeurs:
• **COTILLARD, Romain**
**78490 BAZOCHES SUR GUYONNE (FR)**
• **LAFFONT, Guillaume**
**91191 GIF-SUR-YVETTE CEDEX (FR)**
• **ROUSSEL, Nicolas**
**75010 PARIS (FR)**

(74) Mandataire: **Brevalex**
**Tour Trinity**
**1 B Place de la Défense**
**92400 Courbevoie (FR)**

(56) Documents cités:
• XU OU: "High-Speed Interrogation of a Fiber Grating Sensor based on Wavelength-to-Time Mapping and a Fabry-Perot Configuration", 2018 ASIA COMMUNICATIONS AND PHOTONICS CONFERENCE (ACP), IEEE, 26 October 2018 (2018-10-26), pages 1 - 3, XP033486693, DOI: 10.1109/ACP.2018.8595744
• KONRAD MARKOWSKI ET AL: "Numerical and Experimental Performance Analysis of the Chirped Fiber Bragg Grating Based Abrasion Sensor for the Maintenance Applications in the Industry 4.0", SENSORS, vol. 20, no. 3, 31 January 2020 (2020-01-31), pages 770, XP055752231, DOI: 10.3390/s20030770
• PALANIAPPAN J ET AL: "Use of conventional and chirped optical fibre Bragg gratings to detect matrix cracking damage in composite materials", JOURNAL OF PHYSICS: CONFERENCE SERIES, INSTITUTE OF PHYSICS PUBLISHING, BRISTOL, GB, vol. 15, no. 1, 1 January 2005 (2005-01-01), pages 55 - 60, XP020093805, ISSN: 1742-6596, DOI: 10.1088/1742-6596/15/1/010
• XINYONG DONG ET AL: "A novel temperature-compensated, intensity-modulated fiber Bragg grating sensor system", OPTICAL FIBER SENSORS CONFERENCE, 2008. APOS '08. 1ST ASIA-PACIFIC, IEEE, PISCATAWAY, NJ, USA, 7 November 2008 (2008-11-07), pages 1 - 4, XP031522012, ISBN: 978-1-4244-2131-2

**Description**

**DOMAINE TECHNIQUE**

L'invention se situe dans le domaine des capteurs à fibre optique et, plus précisément, dans le domaine des capteurs à fibre optique à réseau de Bragg. Elle concerne un capteur d'érosion comprenant un réseau de Bragg à pas variable inscrit sur un tronçon de mesure destiné à subir une érosion.

L'invention trouve notamment à s'appliquer dans le domaine de la maintenance prédictive, pour le suivi de l'usure de pièces au moyen de capteurs intégrés. Elle présente un intérêt particulier lorsque les capteurs à fibre optique sont soumis à des environnements difficiles, par exemple de hautes températures et/ou des radiations ionisantes modifiant de façon irréversible les propriétés optiques de la fibre optique. L'invention est également particulièrement utile lorsque les capteurs à fibre optique sont soumis à des variations thermomécaniques importantes, faisant notablement varier la sensibilité du capteur.

**ÉTAT DE LA TECHNIQUE ANTÉRIEURE**

Les réseaux de Bragg à pas variable sur fibre, appelés « chirped fiber Bragg gratings » en anglais, sont des composants optiques qui permettent de créer une relation directe, potentiellement linéaire, entre leur dimension physique et la largeur spectrale du rayonnement réfléchi par ces réseaux de Bragg. Les réseaux de Bragg peuvent ainsi être utilisés comme capteurs d'érosion, la longueur physique d'un réseau étant déterminée à partir de la mesure de la largeur spectrale du rayonnement réfléchi. Dans des environnements difficiles, la fibre optique et le réseau de Bragg inscrit dans cette fibre subissent un vieillissement accéléré conduisant à une modification de leurs propriétés optiques. Le vieillissement peut notamment être accéléré par une exposition à de hautes températures et à des radiations ionisantes. Par ailleurs, la réponse spectrale des réseaux de Bragg à pas variable est également influencée par les conditions de température, de pression et de déformation auxquelles sont soumis les réseaux de Bragg. Tant que ces conditions restent relativement stables et proches des conditions d'étalonnage, le rayonnement réfléchi reste majoritairement influencé par la diminution de la longueur du réseau de Bragg à pas variable.

La publication de XU OU : "High-Speed Interrogation of a Fiber Grating Sensor based on Wavelength-to-Time Mapping and a Fabry-Perot Configuration", Asia Communication and Photonics Conf., IEEE, 26 octobre 2018, pages 1-3 décrit un système de détection de contrainte par fibres optiques munies de réseaux de Bragg (FBG) à pas variables ; un FBG de mesure et un FBG de référence, les deux étant à pas variables.

En revanche, lorsqu'un réseau de Bragg à pas variable sur fibre est soumis à d'importantes variations de température, de pression et/ou de déformation, le spectre du rayonnement réfléchi par le réseau de Bragg subit à la fois un décalage fréquentiel et une modification de sa largeur. En conséquence, le vieillissement de la fibre et les variations des paramètres physiques auxquels le réseau de Bragg à pas variable est soumis faussent la mesure de la longueur physique du réseau de Bragg à pas variable.

En conséquence, bien que certaines fibres optiques intégrant des réseaux de Bragg soient aptes à être utilisées comme capteur dans des environnements extrêmes, notamment du fait de leur tenue mécanique, leur précision de mesure est altérée dans ces environnements.

Un but de l'invention est donc de proposer une solution pour mesurer de façon fiable la longueur physique d'un réseau de Bragg à pas variable sur fibre malgré son vieillissement et les variations des paramètres de son environnement. L'invention a également pour objectif de fournir un capteur d'érosion dont les coûts de conception, de fabrication et de maintenance sont compatibles avec une utilisation à échelle industrielle.

**EXPOSÉ DE L'INVENTION**

À cet effet, l'invention repose sur la prise en compte de l'environnement du réseau de Bragg à pas variable, dit réseau de Bragg de mesure, par la mesure du rayonnement réfléchi par un autre réseau de Bragg, dit réseau de Bragg de référence, inscrit dans la même fibre optique ou dans une fibre optique voisine, et donc soumis à des paramètres physiques identiques ou similaires à ceux auxquels est soumis le réseau de Bragg à pas variable.

Plus précisément, l'invention a pour objet un capteur d'érosion à réseau de Bragg selon la revendication 1.

Pour des conditions de température, de pression et de déformation données, et pour une longueur physique donnée du réseau de Bragg de mesure, ledit réseau de Bragg de mesure est agencé pour réfléchir un rayonnement dans une plage de longueurs d'onde appelée « plage de mesure ». Lorsque le réseau de Bragg de mesure n'a pas subi d'érosion, la plage de mesure est appelée « plage de mesure initiale ». Pour les mêmes conditions de température, de pression et de déformation, la largeur de la plage de mesure diminue avec l'érosion du tronçon de mesure. Par ailleurs, chaque réseau de Bragg de référence est agencé pour réfléchir le rayonnement dans une plage de longueurs d'onde appelée « plage de référence ». En présence de plusieurs réseaux de Bragg de référence, les différentes plages de référence peuvent être identiques, disjointes, ou se chevaucher partiellement. Dans la présente description, toute comparaison entre deux plages de longueurs d'onde implique que les réseaux de Bragg considérés sont soumis à des conditions de température, de pression et de déformation identiques ou similaires.

Lorsque le capteur d'érosion comporte plusieurs fibres optiques, les fibres optiques sont de préférence agencées les unes par rapport aux autres afin d'être soumises aux mêmes conditions de température et de pression. Les fibres optiques peuvent notamment être liées mécaniquement les unes aux autres. En particulier, elles peuvent être liées mécaniquement sur un tronçon englobant à la fois le réseau de Bragg de mesure et les un ou plusieurs réseaux de Bragg de référence. Ainsi, le ou les réseaux de Bragg de référence sont soumis aux mêmes déformations que le réseau de Bragg de mesure.

Selon l'invention au moins l'un des un ou plusieurs réseaux de Bragg de référence est un réseau de Bragg à pas constant. Un tel réseau de Bragg est formé de motifs espacés les uns des autres par une même distance le long de l'axe longitudinal de la fibre optique. Il réfléchit un rayonnement incident à une longueur d'onde appelée « longueur d'onde de Bragg » ou « longueur d'onde de référence ». En pratique, le rayonnement peut être réfléchi sur une plage de longueurs d'onde de quelques nanomètres.

Le réseau de Bragg de mesure et au moins un des un ou plusieurs réseaux de Bragg de référence peuvent être inscrits dans le même cœur d'une fibre optique. Chaque réseau de Bragg de référence peut être inscrit dans le tronçon de mesure ou en dehors de ce tronçon de mesure. De préférence, chaque réseau de Bragg de référence est agencé pour réfléchir un rayonnement dans une plage de référence disjointe de la plage de mesure. Ainsi, les spectres des rayonnements réfléchis par les différents réseaux de Bragg peuvent être distingués les uns des autres.

Toujours selon une forme particulière de réalisation, au moins un réseau de Bragg est formé par un ensemble de bulles. Le réseau de Bragg de mesure et/ou un ou plusieurs des réseaux de Bragg de référence peuvent être des réseaux de Bragg formés chacun par un ensemble de bulles. Un tel réseau de Bragg correspond à un réseau point-à-point de type III inscrit par des impulsions laser femtosecondes. Chaque bulle présente une forme approchant une sphère dont le diamètre peut être inférieur ou égal à 1 μm. En tout état de cause, chaque bulle présente une dimension maximale (diamètre) inférieure ou égale au diamètre du cœur de la fibre optique dans lequel les motifs sont inscrits. Un même cœur peut ainsi accueillir une pluralité de réseaux de Bragg sur un même tronçon. En l'occurrence, le cœur d'une fibre optique peut accueillir le réseau de Bragg de mesure et un ou plusieurs réseaux de Bragg de référence sur un même tronçon.

Selon encore une autre forme particulière de réalisation, l'une des une ou plusieurs fibres optiques comprend un cœur de mesure et un cœur de référence. Le réseau de Bragg de mesure peut alors être inscrit dans le cœur de mesure et au moins un des un ou plusieurs réseaux de Bragg de référence peut être inscrit dans le cœur de référence.

Selon cette dernière forme particulière de réalisation, chaque réseau de Bragg de référence inscrit dans le cœur de référence peut être agencé pour réfléchir un rayonnement dans une plage de longueurs d'onde (plage de référence) comprise dans une plage de longueurs d'onde réfléchies par le réseau de Bragg de mesure (plage de mesure).

Le tronçon de mesure peut s'étendre entre une extrémité proximale, agencée pour recevoir un rayonnement incident, et une extrémité distale, agencée pour subir une érosion. Les un ou plusieurs réseaux de Bragg de référence peuvent alors comprendre un premier réseau de Bragg de référence inscrit sur un premier tronçon de référence situé au voisinage de l'extrémité proximale. Le premier réseau de Bragg de référence est alors situé à distance de l'extrémité soumise à l'érosion et peut fournir une mesure de référence tout au long de l'érosion du réseau de Bragg de mesure, ou pratiquement tout au long de cette érosion.

Selon un premier mode de réalisation, le premier tronçon de référence est situé en amont du tronçon de mesure, c'est-à-dire sur un tronçon de fibre optique normalement non soumis à l'érosion.

Selon un deuxième mode de réalisation, le premier tronçon de référence est inclus dans le tronçon de mesure. Le premier réseau de Bragg de référence est alors susceptible de subir une érosion avec le réseau de Bragg de mesure. Toutefois, le premier réseau de Bragg de référence présente généralement une longueur physique relativement faible par rapport à la longueur physique du réseau de Bragg de mesure. Cette longueur peut être inférieure à la longueur minimale de sécurité du tronçon de mesure, pour laquelle le capteur d'érosion doit être remplacé. À titre d'exemple, le premier réseau de Bragg de référence peut présenter une longueur physique de 1 mm et le réseau de Bragg de mesure peut présenter une longueur physique comprise entre quelques millimètres et quelques centimètres ou décimètres.

Selon une forme particulière de réalisation, les un ou plusieurs réseaux de Bragg de référence comprennent une pluralité de deuxièmes réseaux de Bragg de référence répartis le long du tronçon de mesure. Ces deuxièmes réseaux de Bragg de référence permettent de mesurer une variation d'un paramètre physique le long du tronçon de mesure.

De préférence, les deuxièmes réseaux de Bragg sont agencés pour réfléchir un rayonnement dans des plages de longueurs d'onde (plages de référence) distinctes les unes des autres. Encore préférentiellement, les deuxièmes réseaux de Bragg sont agencés pour réfléchir un rayonnement dans des plages de longueurs d'onde (plages de référence) disjointes les unes des autres.

Selon cette dernière forme particulière de réalisation, l'une des une ou plusieurs fibres optiques peut comprendre un cœur de mesure et un cœur de référence. Le réseau de Bragg de mesure peut alors être inscrit dans le cœur de mesure et les deuxièmes réseaux de Bragg de référence peuvent être inscrits dans le cœur de référence. Avantageusement, chaque deuxième réseau de Bragg de référence présente un pas égal à un pas local du réseau de Bragg de mesure.

Le capteur d'érosion selon l'invention peut comprendre, en outre, une unité de traitement agencée pour mesurer une largeur spectrale d'un rayonnement réfléchi par le réseau de Bragg de mesure, mesurer une longueur d'onde d'un rayonnement réfléchi par au moins un réseau de Bragg de référence, et déterminer une longueur physique du tronçon de mesure en fonction de la largeur spectrale du rayonnement réfléchi par le réseau de Bragg de mesure et de la longueur d'onde du rayonnement réfléchi par l'au moins un réseau de Bragg de référence. Ainsi, la détermination de la longueur physique du tronçon de mesure à partir de la largeur spectrale du rayonnement réfléchi par le réseau de Bragg de mesure, est corrigée des effets des autres paramètres influençant la réponse spectrale du réseau de Bragg de mesure.

L'unité de traitement peut être agencée pour déterminer la longueur physique du tronçon de mesure en fonction de la largeur spectrale du rayonnement réfléchi par le réseau de Bragg de mesure et d'un écart de longueur d'onde entre une longueur d'onde du rayonnement réfléchi par le réseau de Bragg de mesure et la longueur d'onde du rayonnement réfléchi par l'au moins un réseau de Bragg de référence. En particulier, la longueur d'onde considérée pour le rayonnement réfléchi par le réseau de Bragg de mesure peut être la borne inférieure, la borne supérieure, ou une valeur moyenne de la plage de longueurs d'onde dans laquelle le réseau de Bragg de mesure réfléchit le rayonnement (plage de mesure). Il s'agit par exemple de la borne la plus proche de la longueur d'onde du rayonnement réfléchi par l'au moins un réseau de Bragg de référence.

Par ailleurs, l'unité de traitement peut être agencée pour mesurer une longueur d'onde du rayonnement réfléchi par chacun des deuxièmes réseaux de Bragg de référence, déterminer une variation d'un paramètre physique le long du tronçon de mesure en fonction des longueurs d'onde du rayonnement réfléchi par les deuxièmes réseaux de Bragg de référence, et déterminer la longueur physique du tronçon de mesure en fonction de la largeur spectrale du rayonnement réfléchi par le réseau de Bragg de mesure et de la variation du paramètre physique le long du tronçon de mesure. Le paramètre physique susceptible de varier le long du tronçon de mesure peut être une température, une pression ou une déformation au sein d'une fibre optique.

L'invention a également pour objet un procédé mettant en œuvre le capteur d'érosion tel que décrit précédemment. Plus précisément, l'invention a pour objet un procédé de détermination de la longueur physique du tronçon de mesure du capteur d'érosion tel que décrit précédemment, selon la revendication 14.

## BRÈVE DESCRIPTION DES DESSINS

D'autres caractéristiques, détails et avantages de l'invention ressortiront à la lecture de la description qui va suivre, donnée uniquement à titre d'exemple et faisant référence aux dessins annexés sur lesquels :

- la figure 1A représente schématiquement un exemple de réseau de Bragg à pas variable inscrit dans le cœur d'une fibre optique ;
- la figure 1B représente, par un graphique, la variation du pas du réseau de Bragg de la figure 1A le long de l'axe longitudinal de la fibre optique ;
- la figure 1C représente, par un graphique, la réponse spectrale en réflexion du réseau de Bragg à pas variable de la figure 1A ;
- la figure 2A représente schématiquement le réseau de Bragg à pas variable de la figure 1A après érosion ;
- la figure 2B représente, par un graphique analogue à celui de la figure 1C, la réponse spectrale en réflexion du réseau de Bragg à pas variable de la figure 2A ;
- la figure 3A représente schématiquement un réseau de Bragg à pas variable comme un ensemble de réseaux de Bragg à pas constant ;
- la figure 3B représente la sensibilité de chaque réseau de Bragg à pas constant de la figure 3A, en fonction de la variation d'un paramètre physique ;
- la figure 3C représente, par deux graphiques, la réponse spectrale en réflexion de chaque réseau de Bragg à pas constant de la figure 3A, pour deux états physiques différents ;
- la figure 4 représente, par un graphique, un exemple d'évolution de la largeur de la plage de longueurs d'onde d'un rayonnement réfléchi par un réseau de Bragg à pas variable au cours d'une rampe de température évoluant entre 750°C et 20°C ;
- la figure 5A représente schématiquement un premier exemple de réalisation d'un capteur d'érosion à réseau de Bragg selon l'invention, comprenant un seul réseau de Bragg de référence ;
- la figure 5B représente, par un graphique, la variation du pas du réseau de Bragg de mesure et du réseau de Bragg de référence du capteur d'érosion de la figure 5A, le long de l'axe longitudinal de la fibre optique ;
- la figure 5C représente, par un graphique, la réponse spectrale en réflexion du capteur d'érosion de la figure 5A ;
- la figure 6 représente, par un graphique, la réponse spectrale en réflexion du capteur d'érosion de la figure 5A, pour deux états physiques différents ;
- la figure 7 représente, par un graphique, la réponse spectrale en réflexion d'un exemple de capteur d'érosion réalisé conformément à l'invention ;
- la figure 8 représente, par un graphique, l'erreur sur la détermination de la longueur physique du réseau de Bragg de mesure du capteur d'érosion de la figure 7, avec et sans compensation de la variation de sensibilité du réseau de Bragg de mesure ;
- la figure 9A représente schématiquement un deuxième exemple de réalisation d'un capteur d'érosion à réseau de Bragg selon l'invention, comprenant une pluralité de réseaux de Bragg de référence inscrits dans le même cœur que le réseau de Bragg de mesure ;
- la figure 9B représente, par un graphique, la réponse spectrale en réflexion du capteur d'érosion de la figure 9A ;
- la figure 10A représente schématiquement un troisième exemple de réalisation d'un capteur d'érosion à réseau de Bragg selon l'invention, comprenant un réseau de Bragg de mesure inscrit dans un premier cœur d'une fibre optique multicœur et une pluralité de réseaux de Bragg de référence inscrits dans un deuxième cœur de la fibre optique ;
- la figure 10B représente, par un graphique, la réponse spectrale en réflexion du capteur d'érosion de la figure 10A ;
- la figure 11A représente schématiquement un quatrième exemple de réalisation d'un capteur d'érosion à réseau de Bragg selon l'invention, comprenant une première fibre optique dans laquelle est inscrit un réseau de Bragg de mesure et une deuxième fibre dans laquelle est inscrite une pluralité de réseaux de Bragg de référence ;
- la figure 11B représente, par un graphique, la réponse spectrale en réflexion du capteur d'érosion de la figure 11A ;
- la figure 12 représente un exemple de procédé de détermination de la longueur physique d'un réseau de Bragg de mesure dans un capteur d'érosion selon l'invention.

## EXPOSÉ DÉTAILLÉ DE MODES DE RÉALISATION PARTICULIERS

Un réseau de Bragg est une modulation périodique ou pseudo-périodique de l'indice de réfraction dans un guide d'onde, par exemple dans le cœur d'une fibre optique. Pour une période de pas $\Lambda$ et un indice de réfraction effectif $n_e$, un réseau de Bragg réfléchit un rayonnement à la longueur d'onde de Bragg : $\lambda_{Bragg} = 2.\Lambda.n_e$. Les réseaux de Bragg sont sensibles aux paramètres physiques tels que la température, les déformations mécaniques et la pression hydrostatique. Cette sensibilité se traduit par un décalage de la longueur d'onde de Bragg $\Delta\lambda_{Bragg}$ défini par l'équation :

$$\frac{\Delta\lambda_{Bragg}}{\lambda_{Bragg}} = (1 + p_e)\Delta\varepsilon + (\alpha + \zeta)\Delta T + c.\Delta P$$

où $p_e$ est la constante photoélastique, $\Delta\varepsilon$ la déformation mécanique, $\alpha$ le coefficient de dilatation thermique, $\zeta$ le coefficient thermo-optique, $\Delta T$ la variation de température, c la sensibilité à la pression et $\Delta P$ la variation de pression. La sensibilité d'un réseau de Bragg aux paramètres physiques imposés à la fibre optique et au réseau de Bragg permet son utilisation comme capteur.

Un réseau de Bragg à pas variable, appelé « chirped fiber bragg grating » en anglais, est un réseau de Bragg dont le pas n'est pas constant mais varie le long de l'axe longitudinal de la fibre optique. La variation du pas peut notamment être linéaire. Typiquement, la réponse spectrale d'un réseau de Bragg à pas variable est caractérisée par une bande spectrale en réflexion dont la largeur dépend de la variation des pas du réseau, entre le pas le plus faible et le pas le plus grand. Ainsi, il est possible de déterminer la longueur physique d'un réseau de Bragg à pas variable en mesurant la largeur de la bande spectrale en réflexion. Dans le cas d'un réseau dont le pas varie de façon linéaire, toute diminution de sa longueur physique entraîne une diminution proportionnelle de la largeur de sa bande spectrale en réflexion. Les réseaux de Bragg à pas variable peuvent ainsi être utilisés comme capteur d'érosion, par exemple pour mesurer le niveau d'usure d'une pièce.

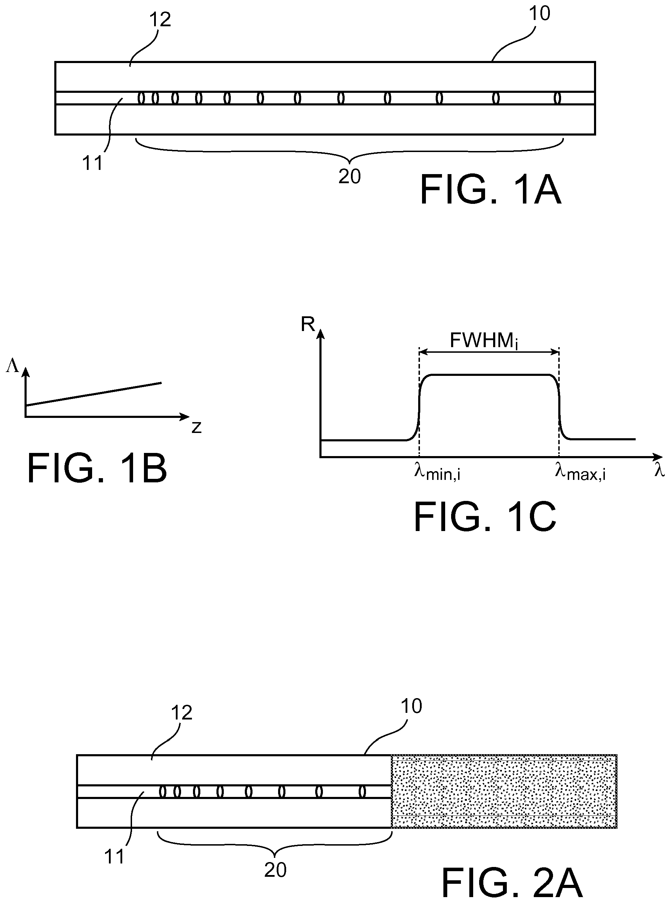

La figure 1A représente schématiquement un exemple de réseau de Bragg à pas variable inscrit dans le cœur d'une fibre optique. La fibre optique 10 comporte un cœur 11 entouré par une gaine optique 12. Un réseau de Bragg à pas variable 20 est inscrit dans le cœur 11 de la fibre optique 10 sur un tronçon appelé « tronçon de mesure ». Les motifs, ou franges, du réseau de Bragg 20 sont espacés les uns des autres avec un pas $\Lambda(z)$ variant linéairement le long de l'axe longitudinal de la fibre optique 10. La variation du pas $\Lambda(z)$ le long de l'axe longitudinal de la fibre optique 10 est également représentée sur la figure 1B par un graphique. L'axe des abscisses correspond à la position longitudinale z des motifs et l'axe des ordonnées correspond au pas $\Lambda(z)$ entre deux motifs successifs à la position longitudinale considérée. La figure 1C représente, par un deuxième graphique, la réponse spectrale en réflexion du réseau de Bragg à pas variable 20 avant érosion. L'axe des abscisses correspond à la longueur d'onde $\lambda$ du rayonnement réfléchi par le réseau de Bragg 20 et l'axe des ordonnées correspond à l'amplitude R du rayonnement réfléchi. Le réseau de Bragg à pas variable 20 est agencé pour réfléchir un rayonnement sur une plage de longueurs d'onde appelée « plage de mesure initiale ». Cette plage de mesure initiale présente une largeur à mi-hauteur initiale $FWHM_i$ comprise entre une longueur d'onde minimale $\lambda_{min,i}$ et une longueur d'onde maximale $\lambda_{max,i}$.

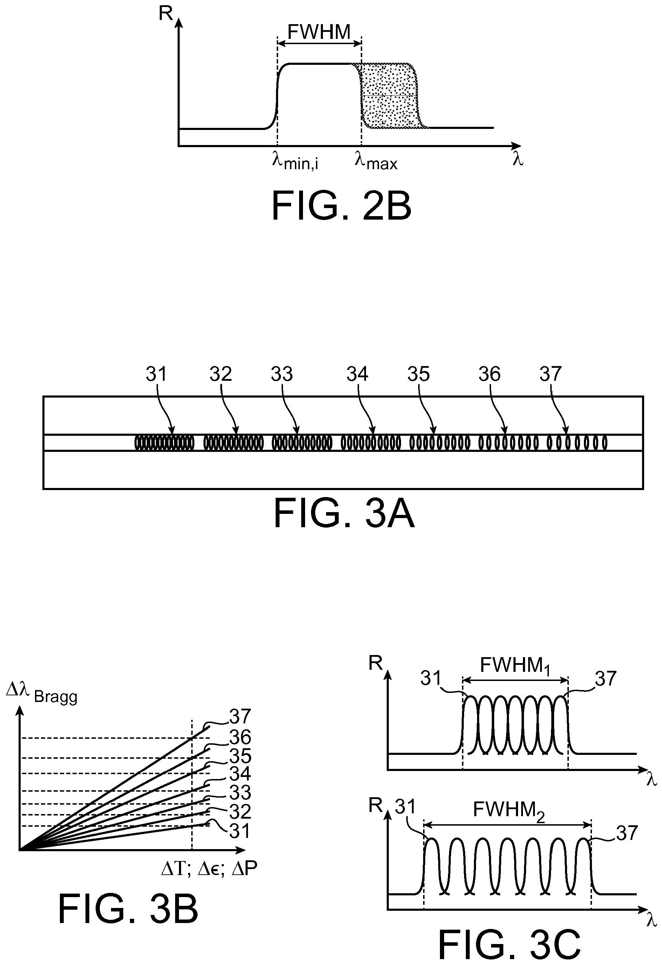

La figure 2A représente schématiquement le réseau de Bragg à pas variable 20 de la figure 1A après érosion. La figure 2B représente, par un graphique analogue à celui de la figure 1C, la réponse spectrale en réflexion du réseau de Bragg 20. La fibre optique 10 et le réseau de Bragg 20 ont subi une érosion sur une partie du tronçon de mesure. Cette érosion se traduit par une diminution de la longueur physique du tronçon de mesure et engendre un décalage de la longueur d'onde maximale $\lambda_{max}$ réfléchie par le réseau de Bragg 20. La largeur à mi-hauteur *FWHM* de la plage de mesure est alors réduite par rapport à la largeur à mi-hauteur initiale *FWHM$_i$*.

La détermination de la largeur de la plage de mesure d'un réseau de Bragg à pas variable permet donc de déduire sa longueur physique. Néanmoins, comme tout autre réseau de Bragg, un réseau de Bragg à pas variable est également sensible à la température, à la déformation et à la pression hydrostatique. Du fait de la dispersion chromatique, la variation d'un paramètre physique n'engendre pas un décalage de longueur d'onde identique pour toutes les longueurs d'onde de la plage de mesure. Ainsi, toute variation d'au moins un paramètre introduit non seulement un décalage de la bande spectrale en réflexion du réseau de Bragg à pas variable, mais également une modification de sa largeur. La détermination de la longueur du réseau de Bragg à pas variable, et donc de l'érosion de la fibre optique, est donc faussée.

Les figures 3A, 3B et 3C illustrent l'influence de la variation de la sensibilité d'un réseau de Bragg à pas variable en fonction de la longueur d'onde. La figure 3A représente schématiquement un réseau de Bragg à pas variable comme un ensemble de réseaux de Bragg à pas constant 31, 32, 33, 34, 35, 36, 37, les différents réseaux de Bragg présentant des pas distincts les uns des autres. La figure 3B représente la sensibilité de chaque réseau de Bragg à pas constant 31-37 à un paramètre physique. L'axe des abscisses représente une variation de température $\Delta T$, une déformation $\Delta\varepsilon$ ou une variation de pression $\Delta P$. L'axe des ordonnées représente le décalage de longueur d'onde de Bragg $\Delta\lambda_{Bragg}$ de chaque réseau de Bragg à pas constant en fonction de la variation du paramètre physique. Il peut être observé que, pour une même variation d'un paramètre physique donné, le décalage de longueur d'onde de Bragg $\Delta\lambda_{Bragg}$ est différent pour les différents réseaux de Bragg. La figure 3C représente, par deux graphiques, la réponse spectrale en réflexion de chaque réseau de Bragg 31-37 pour deux états physiques différents. Sur chaque graphique, l'axe des abscisses représente la longueur d'onde $\lambda$ du rayonnement réfléchi par les réseaux de Bragg 31-37, et l'axe des ordonnées représente l'amplitude *R* de ce rayonnement. Il peut également être observé, entre les deux états physiques, un décalage de la longueur d'onde de Bragg $\Delta\lambda_{Bragg}$ distinct pour les différents réseaux de Bragg, conduisant à une première largeur *FWHM$_1$* de la plage de longueurs d'onde réfléchies par l'ensemble des réseaux de Bragg 31-37 dans le premier état, et une deuxième largeur *FWHM$_2$* de la plage de longueurs d'onde réfléchies par l'ensemble des réseaux de Bragg 31-37 dans le deuxième état, *FWHM$_2$* étant distincte de *FWHM$_1$*.

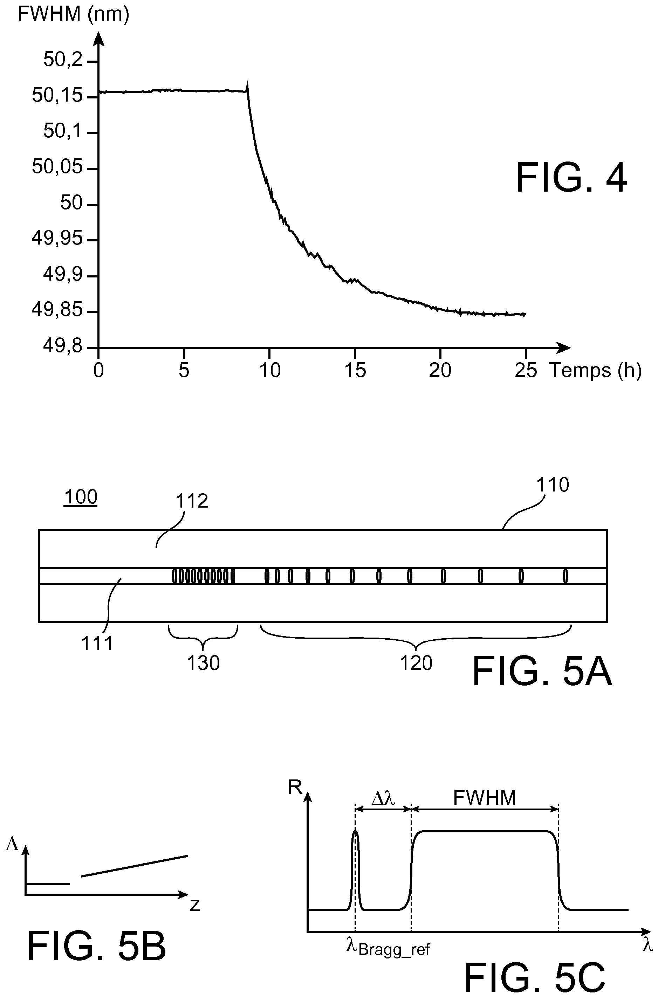

La figure 4 représente un exemple d'évolution de la largeur de la plage de longueurs d'onde d'un rayonnement réfléchi par un réseau de Bragg à pas variable au cours d'une rampe de température évoluant entre 750°C et 20°C. Le réseau de Bragg à pas variable présente une longueur physique de 50 mm (millimètres) et un pas compris entre 1,052 $\mu$m (micromètre) et 1,086 $\mu$m. Sur le graphique de la figure 4, l'axe des abscisses représente le temps, en heures, et l'axe des ordonnées représente la largeur du spectre en réflexion *FWHM,* en nanomètres. La largeur *FWHM* évolue entre 50,16 nm à la température de 750°C et 49,85 nm à la température de 20°C.

La figure 5A représente un premier exemple de réalisation d'un capteur d'érosion à réseau de Bragg selon l'invention. Le capteur d'érosion 100 comporte une fibre optique 110, un réseau de Bragg à pas variable 120 et un réseau de Bragg à pas constant 130. La fibre optique 110 comporte un cœur 111 et une gaine optique 112 entourant le cœur 111. Le réseau de Bragg à pas variable 120 et le réseau de Bragg à pas constant 130 sont inscrits dans le cœur 111 de la fibre optique 110. Le réseau de Bragg à pas variable 120 est destiné à subir une érosion par une extrémité distale de la fibre optique 110, c'est-à-dire l'extrémité opposée à l'extrémité proximale raccordée à un instrument de mesure. Le réseau de Bragg à pas variable 120 est donc également appelé « réseau de Bragg de mesure » et est inscrit sur un tronçon de mesure. Le réseau de Bragg à pas constant 130 est destiné à fournir une information de référence permettant de corriger l'erreur de mesure due à la variation de la sensibilité du réseau de Bragg de mesure 120 en fonction de la longueur d'onde. Il est donc également appelé « réseau de Bragg de référence » et est inscrit sur un tronçon de référence. Le réseau de Bragg de référence 130 est inscrit au voisinage du réseau de Bragg de mesure 120. Il est donc soumis au même environnement, c'est-à-dire aux mêmes variations de température et de pression hydrostatique, aux mêmes déformations, et aux mêmes effets du vieillissement. Dans l'exemple de la figure 5A, le tronçon de référence est situé en amont du tronçon de mesure, c'est-à-dire qu'il est situé plus près que le tronçon de mesure de l'extrémité proximale de la fibre optique 110.

La figure 5B représente la variation du pas A(z) des réseaux de Bragg 120 et 130 le long de l'axe longitudinal de la fibre optique 110. L'axe des abscisses représente la position longitudinale *z* des motifs de chaque réseau et l'axe des ordonnées représente le pas A(z) entre deux motifs successifs à la position longitudinale considérée. Le pas du réseau de Bragg de mesure 120 évolue de façon linéaire le long de l'axe longitudinal. Le pas du réseau de Bragg de référence 130 est inférieur au pas minimal du réseau de Bragg de mesure. Ainsi, le rayonnement réfléchi par le réseau de Bragg de référence 130 présente une longueur d'onde en dehors de la plage spectrale du rayonnement réfléchi par le réseau de Bragg de mesure 120 et peut être identifié.

La figure 5C représente la réponse spectrale en réflexion des réseaux de Bragg 120 et 130. L'axe des abscisses correspond à la longueur d'onde $\lambda$ du rayonnement réfléchi par l'un des réseaux de Bragg 120 et 130, et l'axe des ordonnées correspond à l'amplitude *R* du rayonnement réfléchi. Le réseau de Bragg de mesure 120 est agencé pour réfléchir un rayonnement sur une plage de longueurs d'onde de largeur *FWHM* et le réseau de Bragg de référence est agencé pour réfléchir un rayonnement à une longueur d'onde de Bragg $\lambda_{Bragg\_ref}$. Du fait de la différence de pas entre les réseaux de Bragg 120 et 130, la longueur d'onde de Bragg $\lambda_{Bragg\_ref}$ est située en dehors de la plage de longueurs d'onde du rayonnement réfléchi par le réseau de Bragg de mesure 120. L'écart de longueur d'onde entre la longueur d'onde de Bragg $\lambda_{Bragg\_ref}$ et la borne inférieure de la plage spectrale du rayonnement réfléchi par le réseau de Bragg de mesure 120 est noté $\Delta\lambda$. Cet écart de longueur d'onde est utilisé pour corriger l'erreur de mesure, comme indiqué ci-après.

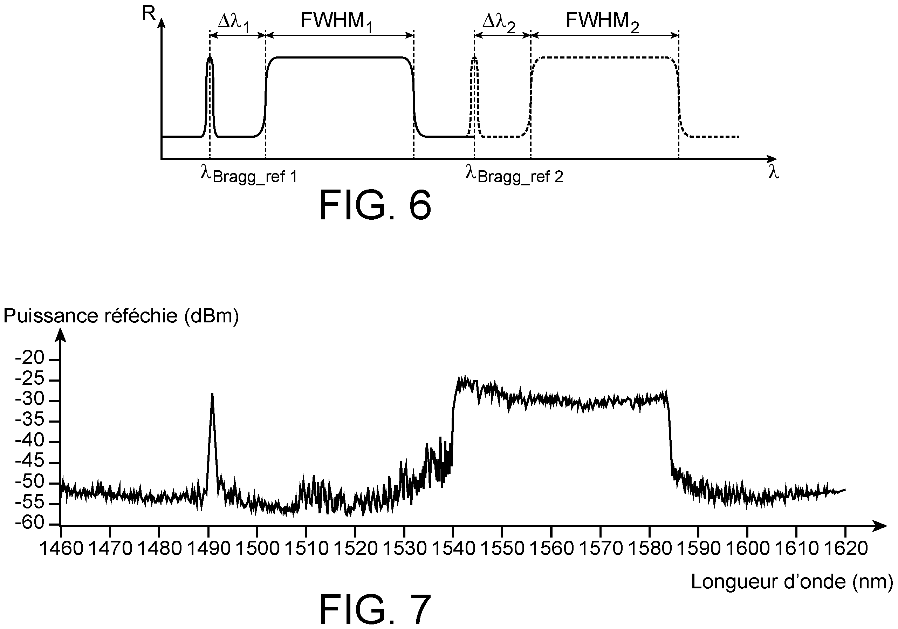

La figure 6 représente, de manière analogue à la figure 5C, la réponse spectrale en réflexion des réseaux de Bragg 120 et 130 pour deux états physiques différents. Dans un premier état, le réseau de Bragg de mesure 120 réfléchit le rayonnement sur une plage de longueurs d'onde de largeur *FWHM*$_1$ et le réseau de Bragg de référence 130 réfléchit le rayonnement à une longueur d'onde de Bragg $\lambda_{Bragg\_ref1}$. L'écart de longueur d'onde entre la longueur d'onde de Bragg $\lambda_{Bragg\_ref1}$ et la borne inférieure de la plage spectrale du rayonnement réfléchi par le réseau de Bragg de mesure 120 est alors noté $\Delta\lambda_1$. Dans un deuxième état, le réseau de Bragg de mesure 120 réfléchit le rayonnement sur une plage de longueurs d'onde de largeur *FWHM*$_2$ et le réseau de Bragg de référence 130 réfléchit le rayonnement à une longueur d'onde de Bragg $\lambda_{Bragg\_ref2}$. L'écart de longueur d'onde entre la longueur d'onde de Bragg $\lambda_{Bragg\_ref2}$ et la borne inférieure de la plage spectrale du rayonnement réfléchi par le réseau de Bragg de mesure 120 est alors noté $\Delta\lambda_2$. En première approximation, il est possible de considérer que la sensibilité d'un réseau de Bragg à un paramètre physique varie linéairement en fonction de la longueur d'onde de Bragg à laquelle ce réseau a été inscrit. Avec une telle approximation, le rapport entre la largeur *FWHM* du spectre réfléchi par le réseau de Bragg de mesure 120 et l'écart de longueur d'onde $\Delta\lambda$ est constant pour une longueur physique donnée du réseau de Bragg de mesure 120. Ainsi, pour deux états physiques, la relation suivante est vérifiée :

$$\frac{FWHM_1}{\Delta\lambda_1} \approx \frac{FWHM_2}{\Delta\lambda_2}$$

À titre de démonstration, prenons le cas de la température. Considérons une variation de température $\varDelta T$ entre les températures $T_1$ et $T_2$, pour un réseau de référence dont la longueur d'onde de Bragg est $\lambda_r$ et un réseau de Bragg de mesure dont les longueurs d'ondes extrêmes sont $\lambda_m$ et $\lambda_M$. Nous définissons alors les grandeurs suivantes $\Delta\lambda = \lambda_m - \lambda_r$ et *FWHM* $= \lambda_M - \lambda_m$. Nous notons les grandeurs ci-avant définies respectivement $\lambda_{r1}, \lambda_{m1}, \Delta\lambda_1,$ *FWHM*$_1$ à la température $T_1$ et $\lambda_{r2}, \lambda_{m2}, \Delta\lambda_2,$ *FWHM*$_2$ à la température $T_2$. Nous avons vu précédemment que :

$$\frac{\Delta\lambda_{Bragg}}{\lambda_{Bragg}} = (\alpha + \zeta)\Delta T$$

Ou encore :

$$\frac{\Delta\lambda_{Bragg}}{\lambda_{Bragg}} = \beta\Delta T$$

Avec $\beta = \alpha + \zeta$ la sensibilité thermique. Pour donner un ordre de grandeur, dans le cas d'une fibre germanosilicate standard, $\beta \approx 6.32E^{-6}/°C$.

On a donc :

$$\frac{d\lambda_{Bragg}}{dT} - \beta.\lambda_{Bragg} = 0$$

$$\lambda_{Bragg}(T) = a.e^{\beta T}$$

avec *a* une constante réelle

$$pour\ T = T_1 : \lambda_{Bragg}(T_1) = \lambda_1\ soit\ a = \lambda_1 e^{-\beta T_1}$$

$$\lambda_{Bragg}(T) = \lambda_1 e^{\beta(T-T_1)}$$

$$soit\ \lambda_2 = \lambda_1 e^{\beta \Delta T}$$

Dans les applications réelles nous avons toujours $\beta \Delta T \ll 1$, nous pouvons donc faire le développement limité à l'ordre 1 suivant :

$$\lambda_2 = \lambda_1 (1 + \beta \Delta T)$$

Nous pouvons donc écrire :

$$\Delta \lambda_2 = \lambda_{m2} - \lambda_{r2}$$

$$\Delta \lambda_2 = \lambda_{m1}(1 + \beta \Delta T) - \lambda_{r1}(1 + \beta \Delta T)$$

$$\Delta \lambda_2 = (\lambda_{m1} - \lambda_{r1})(1 + \beta \Delta T)$$

$$\Delta \lambda_2 = \Delta \lambda_1 (1 + \beta \Delta T)$$

$$\frac{\Delta \lambda_2}{\Delta \lambda_1} = (1 + \beta \Delta T)$$

De même :

$$FWHM_2 = \lambda_{M2} - \lambda_{m2}$$

$$FWHM_2 = \lambda_{M1}(1 + \beta \Delta T) - \lambda_{m1}(1 + \beta \Delta T)$$

$$FWHM_2 = (\lambda_{M1} - \lambda_{m1})(1 + \beta \Delta T)$$

$$FWHM_2 = FWHM_1 (1 + \beta \Delta T)$$

$$\frac{FWHM_2}{FWHM_1} = (1 + \beta \Delta T)$$

Soit au final :

$$\frac{\Delta \lambda_2}{\Delta \lambda_1} = \frac{FWHM_2}{FWHM_1}$$

Ou encore :

$$\forall \Delta T, \frac{FWHM_1}{\Delta \lambda_1} = \frac{FWHM_2}{\Delta \lambda_2} = C, C \in \mathbb{R}$$

Ce rapport constant peut alors être utilisé comme coefficient correcteur de la mesure de la longueur physique du réseau de Bragg de mesure. Considérons maintenant deux états d'érosions 3 et 4, à température constante, avec un réseau de Bragg de longueur L. On note respectivement les grandeurs définies précédemment $L_3$, $\Delta \lambda_3$ et $FWHM_3$ à l'état 3 et $L_4$, $\Delta \lambda_4$ et $FWHM_4$ à l'état 4. Considérant un réseau de Bragg à pas variable inscrit suivant une relation de proportionnalité entre sa longueur et sa larguer à mi-hauteur, on peut écrire :

$$L = a\,FWHM, a \in \mathbb{R}$$

$$\Delta\lambda_3 = \Delta\lambda_4$$

Soit :

$$\frac{L_4}{L_3} = \frac{FWHM_4/\Delta\lambda_4}{FWHM_3/\Delta\lambda_3}$$

Ou encore :

$$L_4 = \frac{FWHM_4}{\Delta\lambda_4}\frac{L_3}{FWHM_3/\Delta\lambda_3}$$

En considérant l'état 3 comme l'état initial du réseau au moment de son inscription, on a une relation de proportionnalité directe entre, d'une part, la longueur du réseau de Bragg de mesure et, d'autre part, le rapport entre sa largeur à mi-hauteur et son écart au réseau de référence quelle que soit la température.

$$\forall T, L \propto \frac{FWHM}{\Delta\lambda}$$

Bien évidemment, il est possible de corriger plus finement la mesure de la longueur physique du réseau de Bragg de mesure 120 en tenant compte de la non-linéarité de la sensibilité d'un réseau de Bragg en fonction de la longueur d'onde.

Les inventeurs ont réalisé un capteur d'érosion à réseau de Bragg conforme à l'invention. Un réseau de Bragg à pas variable et un réseau de Bragg à pas constant ont été inscrits dans le cœur d'une fibre optique par laser femtoseconde. Le réseau de Bragg à pas variable présente une longueur physique de 50 mm de long et un pas variant entre 1 $\mu$m et 1,1 $\mu$m, conférant une largeur spectrale de 44 nm à la température ambiante. Le réseau de Bragg à pas constant présente une longueur de 2 mm et est positionné 1 mm en amont du réseau de Bragg à pas variable. La figure 7 représente, par un graphique, la réponse spectrale en réflexion de ce capteur d'érosion. Sur ce graphique, l'axe des abscisses représente la longueur d'onde du rayonnement réfléchi par les réseaux de Bragg, en nanomètres, et l'axe des ordonnées représente la puissance du rayonnement réfléchi, en dBm.

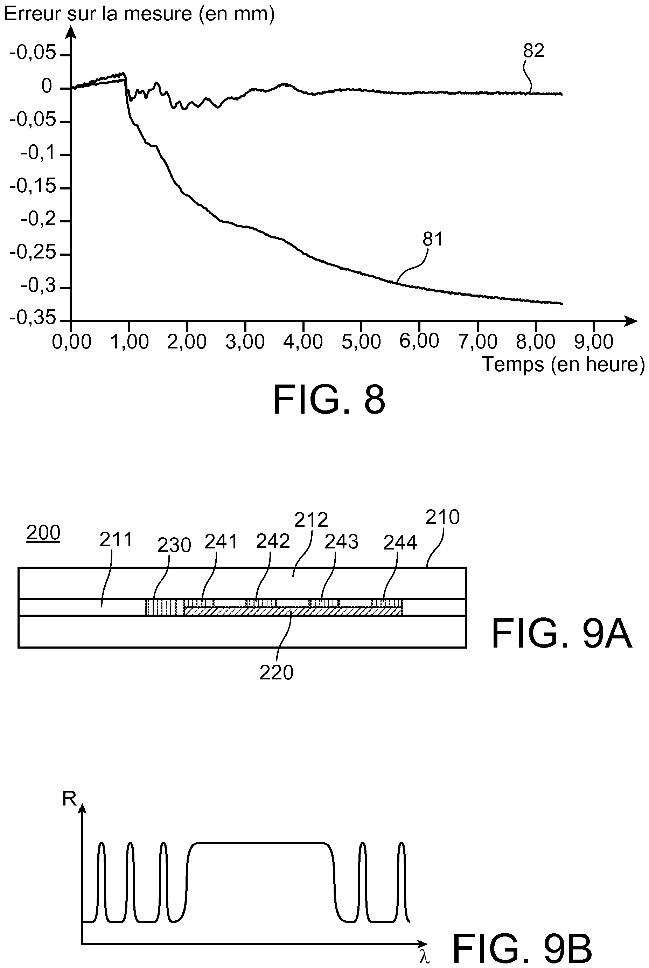

Afin de tester l'effet de la compensation de la variation de sensibilité sur la mesure de la longueur physique du réseau de Bragg de mesure, la fibre optique a été soumise à une rampe de température variant de 750°C à la température ambiante. La largeur à mi-hauteur FWHM du spectre réfléchi par le réseau de Bragg de mesure et l'écart de longueur d'onde $\Delta\lambda$ ont été mesurés au cours de la descente en température de la fibre optique. La longueur physique du réseau de Bragg de mesure a alors été déterminée, d'une part, d'après la largeur FWHM et, d'autre part, d'après la même largeur FWHM et l'écart de longueur d'onde $\Delta\lambda$. La figure 8 représente, par un graphique, l'erreur sur la détermination de la longueur physique du réseau de Bragg de mesure. L'axe des abscisses représente le temps, en heures, et l'axe des ordonnées représente l'erreur de longueur, en millimètres. Une première courbe 81 correspond à l'erreur de longueur déterminée sans compensation de la variation de sensibilité et une deuxième courbe 82 correspond à l'erreur de longueur déterminée avec compensation de la variation de sensibilité. Il peut être observé que, sans compensation, l'erreur maximale de longueur est de 330 $\mu$m à la température ambiante. Avec compensation, l'erreur maximale de longueur est de 30 $\mu$m. L'erreur sur la détermination de la longueur physique du réseau de Bragg est ainsi réduite d'un facteur 11.

La figure 9A représente schématiquement un deuxième exemple de réalisation d'un capteur d'érosion à réseau de Bragg selon l'invention. Le capteur d'érosion 200 comporte une fibre optique 210, un réseau de Bragg à pas variable 220, un premier réseau de Bragg à pas constant 230 et quatre deuxièmes réseaux de Bragg à pas constant 241, 242, 243 et 244. La fibre optique 210 comporte un cœur 211 et une gaine optique 212 entourant le cœur 211. Le réseau de Bragg à pas variable 220, également appelé « réseau de Bragg de mesure », est inscrit dans le cœur 211 de la fibre optique 210 sur un tronçon de mesure. Le premier réseau de Bragg à pas constant 230, également appelé « premier réseau de Bragg de référence », est inscrit dans le cœur 211 sur un premier tronçon de référence, en amont du tronçon de mesure. Les deuxièmes réseaux de Bragg à pas constant 241, 242, 243, 244, également appelés « deuxièmes réseaux de Bragg de référence », sont inscrits dans le cœur 211 sur des deuxièmes tronçons de référence répartis le long du tronçon de mesure. Le réseau de Bragg de mesure 220 et les deuxièmes réseaux de Bragg de référence 241, 242, 243, 244 sont des réseaux point-à-point. Les réseaux de Bragg de référence 230, 241, 242, 243, 244 présentent des pas distincts les uns des autres de façon à réfléchir un rayonnement à des longueurs d'onde de Bragg pouvant être différenciées. Dans la mesure où les réseaux de Bragg de référence 230, 241, 242, 243, 244 sont inscrits dans le même cœur que le réseau de Bragg de mesure 220, ils doivent également présenter un pas différent de la plage de pas du réseau de Bragg de mesure 220.

La figure 9B représente la réponse spectrale en réflexion des réseaux de Bragg 220, 230, 241, 242, 243 et 244. L'axe des abscisses correspond à la longueur d'onde $\lambda$ du rayonnement réfléchi par l'un des réseaux de Bragg, et l'axe des ordonnées correspond à l'amplitude R du rayonnement réfléchi. Les longueurs d'onde de Bragg des différents réseaux de Bragg à pas constant sont distinctes les unes des autres et situées en dehors de la plage de longueurs d'onde du rayonnement réfléchi par le réseau de Bragg de mesure 220. Les réseaux de Bragg de référence et, en particulier, les deuxièmes réseaux de Bragg de référence 241, 242, 243, 244, permettent de mesurer une variation d'un paramètre physique le long du tronçon de mesure et ainsi d'affiner l'estimation de la longueur physique du réseau de Bragg de mesure 220.

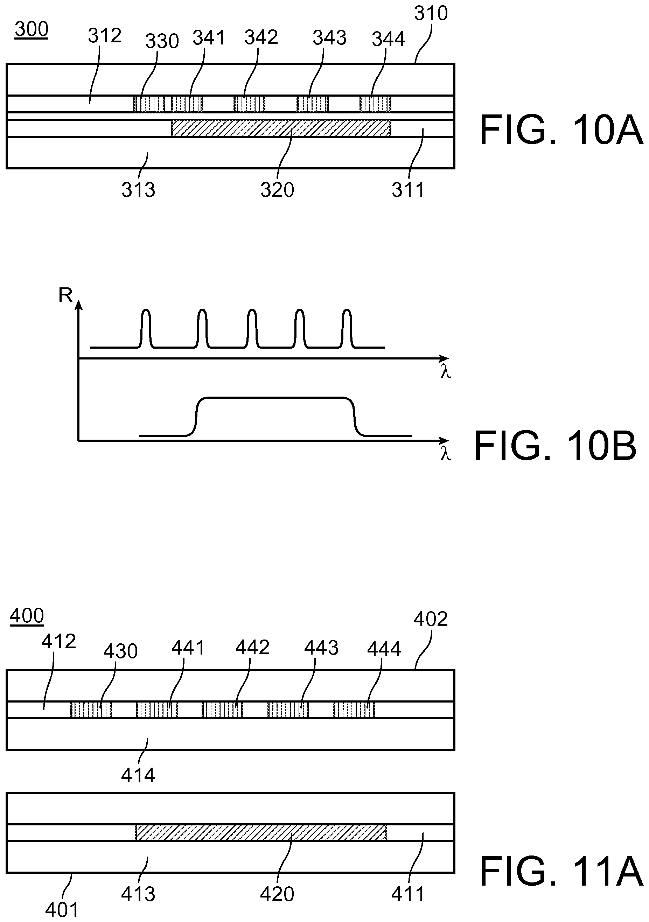

La figure 10A représente schématiquement un troisième exemple de réalisation d'un capteur d'érosion à réseau de Bragg selon l'invention utilisant une fibre optique multicœur. Le capteur d'érosion 300 comporte une fibre optique 310, un réseau de Bragg à pas variable 320, un premier réseau de Bragg à pas constant 330 et quatre deuxièmes réseaux de Bragg à pas constant 341, 342, 343 et 344. La fibre optique 310 comporte un premier cœur 311, appelé « cœur de mesure », un deuxième cœur 312 appelé « cœur de référence », et une gaine optique 313 entourant les deux cœurs 311, 312. Le réseau de Bragg de mesure 320 est inscrit dans le cœur de mesure 311 sur un tronçon de mesure. Le premier réseau de Bragg de référence 330 est inscrit dans le cœur de référence 312 sur un premier tronçon de référence, en amont du tronçon de mesure. Les deuxièmes réseaux de Bragg de référence 341, 342, 343, 344 sont inscrits dans le cœur de référence 312 sur des deuxièmes tronçons de référence répartis le long du tronçon de mesure. Les réseaux de Bragg de référence 330, 341, 342, 343, 344 présentent des pas distincts les uns des autres de façon à réfléchir un rayonnement à des longueurs d'onde de Bragg pouvant être différenciées. En revanche, les deuxièmes réseaux de Bragg de référence 341, 342, 343, 344 présentent chacun un pas égal ou voisin au pas local du réseau de Bragg de mesure 320. Autrement dit, chaque deuxième réseau de Bragg de référence présente un pas égal ou voisin du pas moyen du réseau de Bragg de mesure 320 sur le deuxième tronçon de référence considéré.

La figure 10B représente la réponse spectrale en réflexion des réseaux de Bragg 320, 330, 341, 342, 343 et 344. Les longueurs d'onde de Bragg des différents réseaux de Bragg à pas constant sont distinctes les unes des autres. Les longueurs d'onde de Bragg des deuxièmes réseaux de Bragg de référence 341, 342, 343 et 344 sont toutefois situées dans la plage de longueurs d'onde du rayonnement réfléchi par le réseau de Bragg de mesure 320. Ainsi, la variation de sensibilité du réseau de Bragg avec la longueur d'onde peut être estimée finement.

La figure 11A représente schématiquement un quatrième exemple de réalisation d'un capteur d'érosion à réseau de Bragg selon l'invention utilisant deux fibres optiques monocœur. Le capteur d'érosion 400 comporte une première fibre optique 401, une deuxième fibre optique 402, un réseau de Bragg à pas variable 420, un premier réseau de Bragg à pas constant 430 et quatre deuxièmes réseaux de Bragg à pas constant 441, 442, 443 et 444. La fibre optique 401 comporte un cœur 411 et une gaine optique 413 entourant le cœur 411. La fibre optique 402 comporte un cœur 412 et une gaine optique 414 entourant le cœur 412. Le réseau de Bragg de mesure 420 est inscrit dans le cœur 411 de la fibre optique 401 sur un tronçon de mesure. Le premier réseau de Bragg de référence 430 est inscrit dans le cœur 412 de la deuxième fibre optique 402 sur un premier tronçon de référence, en amont du tronçon de mesure. Les deuxièmes réseaux de Bragg de référence 441, 442, 443, 444 sont inscrits dans le cœur 412 de la deuxième fibre optique 402 sur des deuxièmes tronçons de référence répartis le long du tronçon de mesure. De manière identique au troisième exemple de réalisation, les réseaux de Bragg de référence 430, 441, 442, 443, 444 présentent des pas distincts les uns des autres de façon à réfléchir un rayonnement à des longueurs d'onde de Bragg pouvant être différenciées. Les deuxièmes réseaux de Bragg de référence 441, 442, 443, 444 présentent chacun un pas égal ou voisin au pas local du réseau de Bragg de mesure 420. De préférence, les deux fibres optiques 401, 402 sont liées mécaniquement l'une à l'autre, de façon à ce que les réseaux de Bragg de référence 430, 441, 442, 443, 444 subissent les mêmes déformations que le réseau de Bragg de mesure 420.

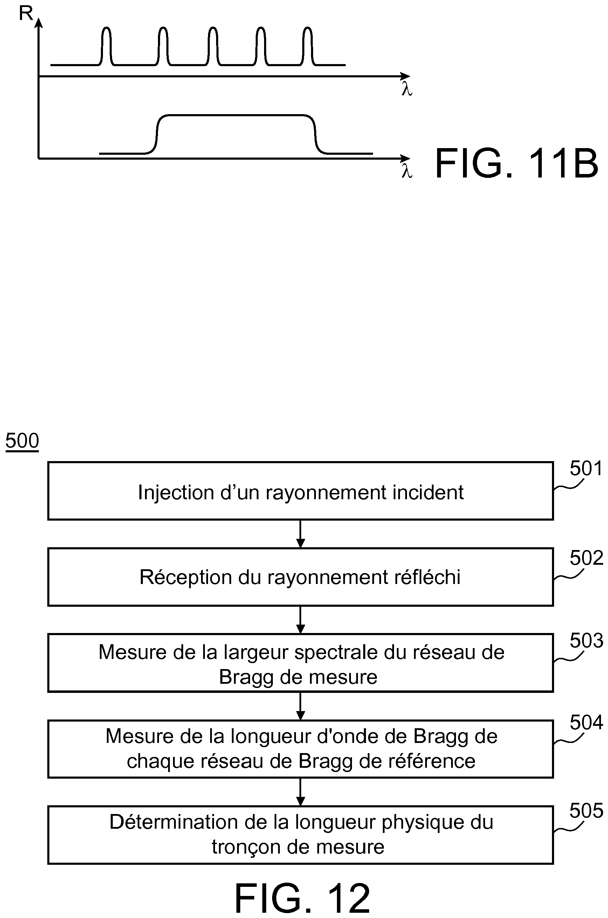

La figure 11B représente la réponse spectrale en réflexion des réseaux de Bragg 420, 430, 441, 442, 443 et 444. Cette réponse spectrale est identique à celle du troisième exemple de réalisation.

D'autres exemples de réalisation peuvent être envisagés dans le cadre de l'invention. En particulier, le capteur d'érosion peut ne comporter que des réseaux de Bragg de référence inscrits sur le tronçon de mesure. Autrement dit, le capteur d'érosion peut ne pas comporter de premier réseau de Bragg de référence inscrit sur un tronçon en amont du tronçon de mesure. Par ailleurs, le capteur d'érosion peut comporter un nombre quelconque de réseaux de Bragg de référence. Le nombre de ces réseaux peut notamment varier en fonction de la longueur physique du réseau de Bragg de mesure et/ou de la précision de mesure souhaitée.

La figure 12 représente un exemple de procédé de détermination de la longueur physique d'un réseau de Bragg de mesure dans un capteur d'érosion selon l'invention. Le procédé 500 comprend une première étape 501 dans laquelle un rayonnement incident est injecté dans le cœur de chaque fibre optique dans laquelle un réseau de Bragg est inscrit. Le rayonnement incident doit présenter une plage de longueurs d'onde couvrant la plage de longueurs d'onde du réseau de Bragg de mesure et la plage de longueurs d'onde de chacun des réseaux de Bragg de référence. Dans une deuxième étape 502, le rayonnement réfléchi par les différents réseaux de Bragg est reçu par une unité de traitement. Dans une étape 503, la largeur spectrale du rayonnement réfléchi par le réseau de Bragg de mesure est mesurée. La largeur spectrale est par exemple la largeur à mi-hauteur du maximum du pic (*FWHM*). Dans une étape 504, la longueur d'onde de Bragg de chaque réseau de Bragg de référence est mesurée. Il est à noter que les étapes 503 et 504 peuvent être réalisées simultanément ou consécutivement, dans un ordre quelconque. Dans une cinquième étape 505, la longueur physique du tronçon de mesure est déterminée en fonction de la largeur spectrale du rayonnement réfléchi par le réseau de Bragg de mesure et de la longueur d'onde de Bragg de chaque réseau de Bragg de référence. En particulier, lorsque le capteur d'érosion comporte un seul réseau de Bragg de référence, la longueur physique du tronçon de mesure peut être déterminée en fonction de la largeur spectrale du rayonnement réfléchi par le réseau de Bragg de mesure et de l'écart de longueur d'onde entre la longueur d'onde de Bragg du réseau de Bragg de référence et une borne inférieure ou supérieure de la plage de longueurs d'onde du rayonnement réfléchi par le réseau de Bragg de mesure.

**Revendications**

1. Capteur d'érosion à réseau de Bragg (100, 200, 300, 400) comprenant :

   • une ou plusieurs fibres optiques (110, 210, 310, 401, 402), chaque fibre optique comprenant un ou plusieurs coeurs (111, 211, 311, 312, 411, 412) et une gaine optique (112, 212, 313, 413, 414) entourant le ou les coeurs,
   • un réseau de Bragg de mesure à pas variable (120, 220, 320, 420) inscrit dans l'un des coeurs (111, 211, 311, 411) de l'une des fibres optiques sur un tronçon de mesure destine à subir une érosion, et
   • un ou plusieurs réseaux de Bragg de référence (130, 230, 241, 242, 243, 244, 330, 341, 342, 343, 344, 430, 441, 442, 443, 444), chaque réseau de Bragg de reference étant inscrit dans l'un des coeurs (111, 211, 312, 412) de l'une des fibres optiques,

   **caractérisé en ce que**
   au moins l'un des un ou plusieurs réseaux de Bragg de référence (130, 230, 241, 242, 243, 244, 330, 341, 342, 343, 344, 430, 441, 442, 443, 444) étant un réseau de Bragg à pas constant.

2. Capteur d'érosion selon la revendication 1, dans lequel le réseau de Bragg de mesure (120, 220) et au moins un des un ou plusieurs réseaux de Bragg de référence (130, 230) sont inscrits dans le même coeur (111, 211) d'une fibre optique.

3. Capteur d'érosion selon la revendication 1 ou 2, dans lequel au moins un réseau de Bragg est formé par un ensemble de bulles.

4. Capteur d'érosion selon l'une des revendications précédentes, dans lequel l'une des une ou plusieurs fibres optiques (310) comprend un coeur de mesure (311) et un coeur de référence (312), le réseau de Bragg de mesure (320) étant inscrit dans le coeur de mesure (311) et au moins un des un ou plusieurs réseaux de Bragg de référence (330, 341, 342, 343, 344) étant inscrit dans le coeur de référence (312).

5. Capteur d'érosion selon la revendication 4, dans lequel chaque réseau de Bragg de référence (341, 342, 343, 344) inscrit dans le coeur de référence (312) est agencé pour réfléchir un rayonnement dans une plage de longueurs d'onde comprise dans une plage de longueurs d'onde réfléchies par le réseau de Bragg de mesure (320).

6. Capteur d'érosion selon l'une des revendications précédentes, dans lequel le tronçon de mesure s'étend entre une extrémité proximale, agencée pour recevoir un rayonnement incident, et une extrémité distale, agencée pour subir une érosion, les un ou plusieurs réseaux de Bragg de référence comprenant un premier réseau de Bragg de référence (130, 230, 330, 430) inscrit sur un premier tronçon de référence situé au voisinage de l'extrémité proximale.

7. Capteur d'érosion selon la revendication 6, dans lequel le premier tronçon de référence est situé en amont du tronçon de mesure.

8. Capteur d'érosion selon la revendication 6, dans lequel le premier tronçon de référence est inclus dans le tronçon de mesure.

9. Capteur d'érosion selon l'une des revendications précédentes, dans lequel les un ou plusieurs réseaux de Bragg de référence comprennent une pluralité de deuxièmes réseaux de Bragg de référence (241, 242, 243, 244, 341, 342, 343, 344, 441, 442, 443, 444) répartis le long du tronçon de mesure.

10. Capteur d'érosion selon la revendication 9, dans lequel l'une des une ou plusieurs fibres optiques (310) comprend un coeur de mesure (311) et un coeur de référence (312), le réseau de Bragg de mesure (320) étant inscrit dans le coeur de mesure (311) et les deuxièmes réseaux de Bragg de référence (341, 342, 343, 344) étant inscrits dans le coeur de référence (312), chaque deuxième réseau de Bragg de reference présentant un pas égal à un pas local du réseau de Bragg de mesure.

11. Capteur d'érosion selon l'une des revendications précédentes comprenant, en outre, une unité de traitement agencée pour mesurer une largeur spectrale d'un rayonnement réfléchi par le réseau de Bragg de mesure (120, 220, 320, 420), mesurer une longueur d'onde d'un rayonnement réfléchi par au moins un réseau de Bragg de référence (130, 230, 241, 242, 243, 244, 330, 341, 342, 343, 344, 430, 441, 442, 443, 444), et déterminer une longueur physique du tronçon de mesure en fonction de la largeur spectrale du rayonnement réfléchi par le réseau de Bragg de mesure et de la longueur d'onde du rayonnement réfléchi par l'au moins un réseau de Bragg de référence.

12. Capteur d'érosion selon la revendication 11, dans lequel l'unité de traitement est agencée pour déterminer la longueur physique du tronçon de mesure en fonction de la largeur spectrale du rayonnement réfléchi par le réseau de Bragg de mesure (120, 220, 320, 420) et d'un écart de longueur d'onde entre une longueur d'onde du rayonnement réfléchi par le réseau de Bragg de mesure et la longueur d'onde du rayonnement réfléchi par l'au moins un réseau de Bragg de référence (130, 230, 241, 242, 243,244,330,341,342,343,344,430 , 4 4 1 , 44 2 ,4 4 3,444).

13. Capteur d'érosion selon l'une des revendications 11 et 12, prise avec l'une des revendications 10 et 11, dans lequel l'unité de traitement est agencée pour mesurer une longueur d'onde du rayonnement réfléchi par chacun des deuxièmes réseaux de Bragg de référence (241, 242, 243, 244, 341, 342, 343, 344, 441, 442, 443, 444), déterminer une variation d'un paramètre physique le long du tronçon de mesure en fonction des longueurs d'onde du rayonnement réfléchi par les deuxièmes réseaux de Bragg de référence, et déterminer la longueur physique du tronçon de mesure en fonction de la largeur spectrale du rayonnement réfléchi par le réseau de Bragg de mesure (120, 220, 320, 420) et de la variation du paramètre physique le long du tronçon de mesure.

14. Procédé de détermination de la longueur physique du tronçon de mesure du capteur d'érosion (100, 200, 300, 400) selon l'une des revendications précédentes, comprenant les étapes de :

• mesurer (503) une largeur spectrale d'un rayonnement réfléchi par le réseau de Bragg de mesure (120, 220, 320, 420),
• mesurer (504) une longueur d'onde d'un rayonnement réfléchi par au moins un réseau de Bragg de référence (130, 230, 241, 242, 243, 244, 330, 341, 342, 343, 344, 430, 441, 442, 443, 444), et
• déterminer (505) une longueur physique du tronçon de mesure en fonction de la largeur spectrale du rayonnement réfléchi par le réseau de Bragg de mesure et de la longueur d'onde du rayonnement réfléchi par l'au moins un réseau de Bragg de référence.

**Patentansprüche**

1. Bragg-Gitter-Erosionssensor (100, 200, 300, 400), umfassend:

• eine oder mehrere optische Fasern (110, 210, 310, 401, 402), wobei jede optische Faser einen oder mehrere Kerne (111, 211, 311, 312, 411, 412) und einen optischen Mantel (112, 212, 313, 413, 414) umfasst, der den Kern oder die Kerne umgibt,
• ein Mess-Bragg-Gitter (120, 220, 320, 420) mit variabler Teilung, das in einen der Kerne (111, 211, 311, 411) einer der optischen Fasern auf einem Messabschnitt eingeschrieben ist, der erodiert werden soll, und
• ein oder mehrere Referenz-Bragg-Gitter (130, 230, 241, 242, 243, 244, 330, 341, 342, 343, 344, 430, 441, 442, 443, 444), wobei jedes Referenz-Bragg-Gitter in einen der Kerne (111, 211, 312, 412) einer der optischen Fasern eingeschrieben ist, **dadurch gekennzeichnet, dass** mindestens eines der einen oder mehreren Referenz-Bragg-Gitter (130, 230, 241, 242, 243, 244, 330, 341, 342, 343, 344, 430, 441, 442, 443, 444) ein Bragg-Gitter mit konstanter Teilung ist.

2. Erosionssensor nach Anspruch 1, wobei das Mess-Bragg-Gitter (120, 220) und mindestens eines der ein oder mehreren Referenz-Bragg-Gitter (130, 230) in denselben Kern (111, 211) einer optischen Faser eingeschrieben sind.

3. Erosionssensor nach Anspruch 1 oder 2, wobei mindestens ein Bragg-Gitter durch eine Baugruppe von Blasen gebildet wird.

4. Erosionssensor nach einem der vorstehenden Ansprüche, wobei eine der einen oder mehreren optischen Fasern (310) einen Messkern (311) und einen Referenzkern (312) umfasst, wobei das Mess-Bragg-Gitter (320) in den Messkern (311) eingeschrieben ist und mindestens eines der einen oder mehreren Referenz-Bragg-Gitter (330, 341, 342, 343, 344) in den Referenzkern (312) eingeschrieben ist.

5. Erosionssensor nach Anspruch 4, wobei jedes in den Referenzkern (312) eingeschriebene Referenz-Bragg-Gitter (341, 342, 343, 344) angeordnet ist, um Strahlung in einem Wellenlängenbereich zu reflektieren, der innerhalb eines Bereichs von Wellenlängen liegt, die von dem Mess-Bragg-Gitter (320) reflektiert werden.

6. Erosionssensor nach einem der vorstehenden Ansprüche, wobei sich der Messabschnitt zwischen einem proximalen Ende, das zum Empfangen einfallender Strahlung eingerichtet ist, und einem distalen Ende, das zum Erodieren eingerichtet ist, erstreckt, wobei das eine oder die mehreren Referenz-Bragg-Gitter ein erstes Referenz-Bragg-Gitter (130, 230, 330, 430) umfassen, das auf einen ersten Referenzabschnitt in der Nähe des proximalen Endes geschrieben ist.

7. Erosionssensor nach Anspruch 6, wobei die erste Referenzstrecke stromaufwärts der Messstrecke angeordnet ist.

8. Erosionssensor nach Anspruch 6, wobei die erste Referenzstrecke in der Messstrecke enthalten ist.

9. Erosionssensor nach einem der vorstehenden Ansprüche, wobei das eine oder die mehreren Referenz-Bragg-Gitter eine Vielzahl von zweiten Referenz-Bragg-Gittern (241, 242, 243, 244, 341, 342, 343, 344, 441, 442, 443, 444) umfasst, die entlang der Messstrecke verteilt sind.

10. Erosionssensor nach Anspruch 9, wobei eine der einen oder mehreren optischen Fasern (310) einen Messkern (311) und einen Referenzkern (312) umfasst, wobei das Mess-Bragg-Gitter (320) in den Messkern (311) eingeschrieben ist und die zweiten Referenz-Bragg-Gitter (341, 342, 343, 344) in den Referenzkern (312) eingeschrieben sind, wobei jedes zweite Referenz-Bragg-Gitter eine Teilung aufweist, die gleich einer lokalen Teilung des Mess-Bragg-Gitters ist.

11. Erosionssensor nach einem der vorstehenden Ansprüche, ferner umfassend eine Verarbeitungseinheit, die eingerichtet ist, eine spektrale Breite einer von dem Mess-Bragg-Gitter (120, 220, 320, 420) reflektierten Strahlung zu messen, eine Wellenlänge einer von mindestens einem Referenz-Bragg-Gitter (130, 230, 241, 242, 243, 244, 330, 341, 342, 343, 344, 430, 441, 442, 443, 444) reflektierten Strahlung zu messen, und eine physikalische Länge des Messabschnitts als Funktion der spektralen Breite der von dem Mess-Bragg-Gitter reflektierten Strahlung und der Wellenlänge der von dem mindestens einen Referenz-Bragg-Gitter reflektierten Strahlung zu bestimmen.

12. Erosionssensor nach Anspruch 11, wobei die Verarbeitungseinheit eingerichtet ist, die physikalische Länge des Messabschnitts als Funktion der spektralen Breite der von dem Mess-Bragg-Gitter reflektierten Strahlung (120, 220, 320, 420) und einer Wellenlängenabweichung zwischen einer Wellenlänge der von dem Mess-Bragg-Gitter reflektierten Strahlung und der Wellenlänge der von dem mindestens einen Referenz-Bragg-Gitter (130, 230, 241, 242, 243, 244, 330, 341, 342, 343, 344, 430, 441, 442, 443, 444) reflektierten Strahlung zu berechnen.

13. Erosionssensor nach einem der Ansprüche 11 und 12 in Verbindung mit einem der Ansprüche 10 und 11, wobei die Verarbeitungseinheit angeordnet ist, um eine Wellenlänge der von jedem der zweiten Referenz-Bragg-Gitter (241, 242, 243, 244, 341, 342, 343, 344, 441, 442, 443, 444) reflektierten Strahlung zu messen, eine Änderung eines physikalischen Parameters entlang der Messstrecke als eine Funktion der Wellenlängen der von den zweiten Referenz-Bragg-Gittern reflektierten Strahlung zu bestimmen, und die physikalische Länge des Messabschnitts als Funktion der spektralen Breite der von den Mess-Bragg-Gittern (120, 220, 320, 420) reflektierten Strahlung und der Änderung des physikalischen Parameters entlang des Messabschnitts zu bestimmen.

14. Verfahren zum Bestimmen der physikalischen Länge der Messstrecke des Erosionssensors (100, 200, 300, 400) nach einem der vorstehenden Ansprüche, umfassend die Schritte:

   • Messen (503) einer spektralen Breite von Strahlung, die von dem messenden Bragg-Gitter (120, 220, 320, 420) reflektiert wird,
   • Messen (504) einer Wellenlänge von Strahlung, die von mindestens einem Referenz-Bragg-Gitter (130, 230, 241, 242, 243, 244, 330, 341, 342, 343, 344, 430, 441, 442, 443, 444) reflektiert wird, und
• Bestimmen (505) einer physikalischen Länge des Messabschnitts als Funktion der spektralen Breite der von dem Mess-Bragg-Gitter reflektierten Strahlung und der Wellenlänge der von dem mindestens einen Referenz-Bragg-Gitter reflektierten Strahlung.

## Claims

1. Bragg-grating erosion sensor (100, 200, 300, 400) comprising:

   - one or more optical fibres (110, 210, 310, 401, 402), each optical fibre comprising one or more cores (111, 211, 311, 312, 411, 412) and an optical sheath (112, 212, 313, 413, 414) surrounding the core(s),
   - a variable-pitch measurement Bragg grating (120, 220, 320, 420) inscribed in one of the cores (111, 211, 311, 411) of one of the optical fibres in a measurement section intended to undergo an erosion, and
   - one or more reference Bragg gratings (130, 230, 241, 242, 243, 244, 330, 341, 342, 343, 344, 430, 441, 442, 443, 444), each reference Bragg grating being inscribed in one of the cores (111, 211, 312, 412) of one of the optical fibres,

   **characterised in that** at least one of the one or more reference Bragg gratings (130, 230, 241, 242, 243, 244, 330, 341, 342, 343, 344, 430, 441, 442, 443, 444) is a constant-pitch Bragg grating.

2. Erosion sensor according to claim 1, wherein the measurement Bragg grating (120, 220) and at least one of the one or more reference Bragg gratings (130, 230) are inscribed in the same core (111, 211) of an optical fibre.

3. Erosion sensor according to claim 1 or 2, wherein at least one Bragg grating is formed by a set of bubbles.

4. Erosion sensor according to one of the preceding claims, wherein one of the one or more optical fibres (310) comprises a measurement core (311) and a reference core (312), the measurement Bragg grating (320) being inscribed in the measurement core (311) and at least one of the one or more reference Bragg gratings (330, 341, 342, 343, 344) being inscribed in the reference core (312).

5. Erosion sensor according to claim 4, wherein each reference Bragg grating (341, 342, 343, 344) inscribed in the reference core (312) is arranged to reflect a radiation in a range of wavelengths comprised in a range of wavelengths reflected by the measurement Bragg grating (320).

6. Erosion sensor according to one of the preceding claims, wherein the measurement section extends between a proximal end, arranged to receive an incident radiation, and a distal end, arranged to undergo an erosion, the one or more reference Bragg gratings comprising a first reference Bragg grating (130, 230, 330, 430) inscribed in a first reference section located near the proximal end.

7. Erosion sensor according to claim 6, wherein the first reference section is located upstream of the measurement section.

8. Erosion sensor according to claim 6, wherein the first reference section is included in the measurement section.

9. Erosion sensor according to one of the preceding claims, wherein the one or more reference Bragg gratings comprise a plurality of second reference Bragg gratings (241, 242, 243, 244, 341, 342, 343, 344, 441, 442, 443, 444) distributed along the measurement section.

10. Erosion sensor according to claim 9, wherein one of the one or more optical fibres (310) comprises a measurement core (311) and a reference core (312), the measurement Bragg grating (320) being inscribed in the measurement core (311) and the second reference Bragg gratings (341, 342, 343, 344) being inscribed in the reference core (312), each second reference Bragg grating having a pitch equal to a local pitch of the measurement Bragg grating.

11. Erosion sensor according to one of the preceding claims, further comprising a processing unit arranged to measure a spectral width of a radiation reflected by the measurement Bragg grating (120, 220, 320, 420), measure a wavelength of a radiation reflected by at least one reference Bragg grating (130, 230, 241, 242, 243, 244, 330, 341, 342, 343, 344, 430, 441, 442, 443, 444), and determine a physical length of the measurement section according to the spectral width of the radiation reflected by the measurement Bragg grating and the wavelength of the radiation reflected by the at least one reference Bragg grating.

12. Erosion sensor according to claim 11, wherein the processing unit is arranged to determine the physical length of the measurement section according to the spectral width of the radiation reflected by the measurement Bragg grating (120, 220, 320, 420) and a wavelength difference between a wavelength of the radiation reflected by the measurement Bragg grating and the wavelength of the radiation reflected by the at least one reference Bragg grating (130, 230, 241, 242, 243, 244, 330, 341, 342, 343, 344, 430, 441, 442, 443, 444).

13. Erosion sensor according to one of claims 11 and 12, taken with one of claims 10 and 11, wherein the processing unit is arranged to measure a wavelength of the radiation reflected by each of the second reference Bragg gratings (241, 242, 243, 244, 341, 342, 343, 344, 441, 442, 443, 444), determine a variation of a physical parameter along the measurement section according to the wavelengths of the radiation reflected by the second reference Bragg gratings, and determine the physical length of the measurement section according to the spectral width of the radiation reflected by the measurement Bragg grating (120, 220, 320, 430) and the variation of the physical parameter along the measurement section.

14. Method for determining the physical length of the measurement section of the erosion sensor (100, 200, 300, 400) according to one of the preceding claims, comprising the steps of:

- measuring (503) a spectral width of a radiation reflected by the measurement Bragg grating (120, 220, 320, 420),
- measuring (504) a wavelength of a radiation reflected by at least one reference Bragg grating (130, 230, 241, 242, 243, 244, 330, 341, 342, 343, 344, 430, 441, 442, 443, 444), and
- determining (505) a physical length of the measurement section according to the spectral width of the radiation reflected by the measurement Bragg grating and the wavelength of the radiation reflected by the at least one reference Bragg grating.

FIG. 1A

FIG. 1B

FIG. 1C

FIG. 2A

FIG. 2B

FIG. 3A

FIG. 3B

FIG. 3C

FIG. 4

FIG. 5A

FIG. 5B

FIG. 5C

FIG. 6

Puissance réféchie (dBm)

Longueur d'onde (nm)

FIG. 7

EP 4 162 235 B1

Erreur sur la mesure (en mm)

FIG. 8

FIG. 9A

FIG. 9B

FIG. 10A

FIG. 10B

FIG. 11A

FIG. 11B

500

| Injection d'un rayonnement incident | 501 |
| Réception du rayonnement réfléchi | 502 |
| Mesure de la largeur spectrale du réseau de Bragg de mesure | 503 |
| Mesure de la longueur d'onde de Bragg de chaque réseau de Bragg de référence | 504 |
| Détermination de la longueur physique du tronçon de mesure | 505 |

FIG. 12

**EP 4 162 235 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- High-Speed Interrogation of a Fiber Grating Sensor based on Wavelength-to-Time Mapping and a Fabry-Perot Configuration. **XU OU**. Asia Communication and Photonics Conf.. IEEE, 26 October 2018, 1-3